# FASCICULE DE BREVET EUROPEEN

(11) **EP 3 514 507 B1**
(45) Date de publication et mention de la délivrance du brevet: **07.06.2023**
(21) Numéro de dépôt: 18212163.2
(22) Date de dépôt: 13.12.2018
(51) Int. Cl.: G01F 23/24, F22B 37/46, H02M 5/06, H02M 7/06

(54) **DISPOSITIF DE DÉTECTION DU NIVEAU D'UN LIQUIDE**
VORRICHTUNG ZUR ERFASSUNG DES PEGELS EINER FLÜSSIGKEIT
DEVICE FOR DETECTING THE LEVEL OF A LIQUID

(30) Priorité: 14.12.2017 FR 1762193
(43) Date de publication de la demande: 24.07.2019
(73) Titulaire: SEB S.A., 69130 Ecully (FR)
(72) Inventeur: ABERBACHE, Belkacem, 74150 RUMILLY (FR)
(74) Mandataire: Germain Maureau

(56) Documents cités:
- JP-B2- 3 370 855
- US-A1- 2004 152 996
- US-A1- 2015 365 003
- US-B1- 6 392 451

## Description

La présente invention concerne le domaine des capteurs, et plus particulièrement des détecteurs du niveau d'un liquide dans un récipient, ledit liquide étant de l'eau par exemple.

Il est connu, par exemple du document JP 3370855B2 d'utiliser une tige conductrice plongée, par une première extrémité, dans un récipient contenant un liquide conducteur électrique ; la tige conductrice est branchée, par sa deuxième extrémité, à une source de tension électrique, la masse du récipient étant raccordée à la terre. Lorsque le niveau du liquide dans le récipient atteint le niveau de la première extrémité libre de la tige, un circuit électrique se ferme et un courant électrique circule entre la source de tension et la terre, en passant par le liquide conducteur et par la tige conductrice. La détection d'un courant circulant dans la tige permet d'en déduire que le niveau du liquide a atteint le niveau, connu par ailleurs, de l'extrémité libre de la tige conductrice dans le récipient.

Sur les appareils connus qui mettent en oeuvre ce type de dispositif, la deuxième extrémité de la tige conductrice est électriquement reliée à la phase d'une alimentation secteur, tandis que la première extrémité de la tige conductrice, plongée dans le liquide conducteur, se trouve reliée électriquement, via le liquide, à la masse de l'appareil considéré, la masse de l'appareil étant reliée à la terre ; la différence de potentiel entre la phase et la terre génère alors un courant dans le circuit constitué entre ces deux pôles par la tige et l'eau. Si, en revanche, la deuxième extrémité de la tige conductrice était raccordée au neutre de l'alimentation secteur, alors, la différence de potentiel entre le neutre et la terre étant par construction très faible, voire nulle, le dispositif ne fonctionnerait pas.

Le problème à résoudre est donc de concevoir un dispositif qui détecte le contact de l'eau avec le capteur présent dans le récipient quel que soit le sens du câblage de l'alimentation du dispositif sur la prise secteur, ladite alimentation étant toutefois équipée d'une connexion à la terre.

L'invention a donc pour but de proposer une solution à tout ou partie de ce problème.

A cet effet, la présente invention concerne un dispositif de détection du niveau d'un liquide conducteur contenu dans une cuve d'un générateur de vapeur, ladite cuve comprenant un corps conducteur destiné à être relié électriquement à un point de connexion présentant le potentiel électrique de la terre du réseau électrique, ledit dispositif comprenant :
- un capteur relié mécaniquement au corps de la cuve mais isolé électriquement de celui-ci, et comprenant une terminaison conductrice destinée à être positionnée à un niveau prédéterminé à l'intérieur de la cuve de manière à plonger dans le liquide conducteur lorsque celui-ci atteint le niveau prédéterminé dans la cuve, le capteur présentant un point de connexion du capteur,
- un détecteur de courant relié au point de connexion du capteur et agencé pour détecter le passage d'un courant électrique au travers du capteur lorsque le liquide conducteur atteint le niveau prédéterminé dans la cuve,
- un circuit électrique d'alimentation agencé pour alimenter le capteur en courant électrique, ledit circuit électrique comprenant un premier point de raccordement destiné à être relié électriquement à la phase ou respectivement au neutre du réseau électrique et un deuxième point de raccordement destiné à être relié électriquement au neutre ou respectivement à la phase du réseau électrique ;
   ledit dispositif de détection étant arrangé de sorte que le circuit électrique comprend un montage électrique agencé pour relier électriquement le point de connexion du capteur à un potentiel électrique présentant une valeur différente du potentiel électrique de la terre du réseau électrique lorsque:
   - le premier point de raccordement est relié à la phase du réseau électrique et le deuxième point de raccordement est relié au neutre du réseau électrique, ou inversement lorsque
   - le premier point de raccordement est relié au neutre du réseau électrique et le deuxième point de raccordement est relié à la phase du réseau électrique,
      dans lequel le montage électrique comprend un diviseur de tension avec un premier pôle d'entrée et un deuxième pôle d'entrée relié électriquement respectivement au premier et au deuxième point de raccordement, et un pôle de sortie agencé pour alimenter le capteur en courant, ou
      le montage électrique comprend une alimentation isolée comprenant un premier pôle d'entrée et un deuxième pôle d'entrée reliés électriquement respectivement au premier et au deuxième point de raccordement électrique, et comprenant un premier pôle de sortie et un deuxième pôle de sortie, le premier pôle de sortie étant relié électriquement à un point de connexion présentant le potentiel électrique de la terre du réseau électrique, et le deuxième pôle de sortie étant agencé pour alimenter le capteur en courant.

Bien entendu, le réseau électrique délivre un courant électrique d'alimentation alternatif.

Ainsi, selon ces dispositions, quel que soit le câblage de l'alimentation du dispositif sur la prise secteur, lorsque le liquide atteint la hauteur prédéterminée, un courant électrique est détecté dans le capteur.

Selon un mode de réalisation, le montage électrique est agencé pour établir une valeur du potentiel électrique au point de connexion du capteur qui est fonction du potentiel électrique au premier point de raccordement et du potentiel électrique au deuxième point de raccordement.

Selon un mode de réalisation, la valeur du potentiel électrique au point de connexion du capteur est une valeur intermédiaire entre le potentiel électrique au premier point de raccordement et le potentiel électrique au deuxième point de raccordement.

Selon un mode de réalisation, la valeur de la différence entre le potentiel électrique au point de connexion du capteur et le potentiel électrique au deuxième point de raccordement est proportionnelle à la différence entre le potentiel électrique au premier point de raccordement et le potentiel électrique au deuxième point de raccordement.

Selon un mode de réalisation, le montage électrique comprend un diviseur de tension avec un premier pôle d'entrée et un deuxième pôle d'entrée relié électriquement respectivement au premier et au deuxième point de raccordement, et un pôle de sortie agencé pour alimenter le capteur en courant.

Selon un mode de réalisation, le diviseur de tension comprend une première impédance et une deuxième impédance dont les valeurs sont choisies en fonction de la conductivité électrique du liquide conducteur.

Ainsi, selon ces dispositions, il sera possible de déterminer une valeur pour chacune des impédances de façon à obtenir un potentiel électrique, au point de connexion du capteur, suffisant pour que le contact de la terminaison du capteur avec le liquide déclenche le passage d'un courant dans le capteur.

Selon un mode de réalisation, la première impédance et la deuxième impédance sont identiques, de manière à obtenir un diviseur de tension à point milieu.

Selon cette configuration du montage électrique, le potentiel électrique, au point de connexion du capteur, sera suffisant pour que le contact de la terminaison du capteur avec le liquide déclenche le passage d'un courant dans le capteur. Selon cette configuration du montage électrique, la différence de potentiel entre le point de connexion du capteur et la terre sera la même quel que soit le sens du câblage de l'alimentation du dispositif sur la prise secteur.

Selon un mode de réalisation le montage électrique comprend une alimentation isolée comprenant un premier pôle d'entrée et un deuxième pôle d'entrée reliés électriquement respectivement au premier et au deuxième point de raccordement électrique, et comprenant un premier pôle de sortie et un deuxième pôle de sortie, le premier pôle de sortie étant relié électriquement à un point de connexion présentant le potentiel électrique de la terre du réseau électrique, et le deuxième pôle de sortie étant agencé pour alimenter le capteur en courant.

Selon un mode de réalisation, l'alimentation isolée est un transformateur électrique comprenant un bobinage primaire relié électriquement au premier pôle d'entrée et au deuxième pôle d'entrée, et un bobinage secondaire relié électriquement au premier pôle de sortie et au deuxième pôle de sortie.

Ce mode de réalisation permet en outre d'obtenir une isolation galvanique entre le courant circulant dans le capteur et les perturbations électriques liées à l'alimentation électrique du secteur.

Selon un mode de réalisation, le détecteur de courant comprend un optocoupleur comportant une diode électroluminescente couplée à un phototransistor, la diode électroluminescente étant isolé galvaniquement du phototransistor et reliée électriquement au point de connexion du capteur.

Ce mode de réalisation permet d'obtenir un deuxième niveau d'isolation galvanique entre le courant circulant dans le capteur et les perturbations électriques liées à l'alimentation électrique du secteur.

Selon un mode de réalisation, le détecteur de courant comprend un microcontrôleur comportant une broche reliée électriquement au point de connexion du capteur, le cas échéant au phototransistor.

Selon ces dispositions, le microcontrôleur détecte le passage de courant dans le capteur, et détecte ainsi que le liquide a atteint la hauteur prédéterminée de la terminaison du capteur.

Selon un mode de réalisation, le microcontrôleur comprend une alimentation électrique autonome en courant continu.

Selon un mode de réalisation, la masse de l'alimentation électrique du microcontrôleur est relié à une masse du circuit électrique d'alimentation.

Selon un mode de réalisation, le circuit électrique d'alimentation et le détecteur de courant sont montés sur une même carte électronique.

Selon ces modes de réalisation le coût de réalisation de l'alimentation du microcontrôleur est réduit, car la masse du microcontrôleur peut être connectée à un point de l'alimentation secteur, phase ou neutre. Il n'est alors pas utile de l'isoler.

Pour sa bonne compréhension, l'invention est décrite en référence aux dessins ci-annexés, représentants, à titre d'exemple non limitatif, une forme de réalisation d'un dispositif selon l'invention.
Figure 1 représente le schéma électrique d'un dispositif selon une première forme de réalisation de l'invention.
Figure 2 représente le schéma électrique d'un dispositif selon une deuxième forme de réalisation de l'invention, avec une alimentation électrique isolée.
Figure 3 représente le schéma électrique d'un dispositif selon une troisième forme de réalisation de l'invention, avec un transformateur pour l'alimentation électrique isolée.
Figure 4 est une vue de l'écran d'un oscilloscope sur lequel est affichée le signal observé par le microcontrôleur entre les bornes du phototransistor lorsque le capteur n'est pas en contact avec l'eau.
Figure 5 est une vue de l'écran d'un oscilloscope sur lequel est affichée le signal observé par le microcontrôleur entre les bornes du phototransistor lorsque le capteur est en contact avec l'eau.
Figure 6 représente le schéma électrique d'un dispositif selon l'invention avec un montage électrique comprenant un diviseur de tension et un détecteur de courant sans opto-coupleur.
Figure 7 représente le schéma électrique d'un dispositif selon l'invention avec un montage électrique comprenant une alimentation électrique isolée et un détecteur de courant tel que représenté sur la figure 6.

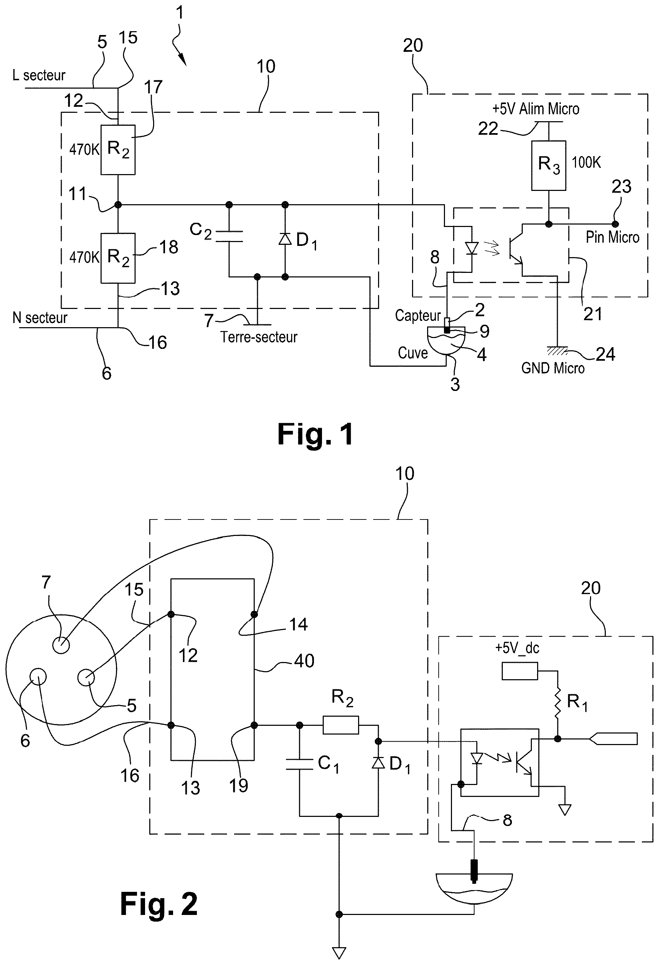

Une forme de réalisation de l'invention sera décrite en détail en référence à la figure 1.

Selon cette forme de réalisation, un capteur 2, comprenant une terminaison conductrice 9, est placé à l'intérieur d'une cuve 3, par exemple la cuve d'un générateur de vapeur. La cuve comprend un corps en matériau conducteur, destiné à être relié électriquement à un point de connexion présentant le potentiel électrique de la terre 7 du réseau électrique, conformément à la réglementation.

Le capteur 2 est relié mécaniquement au corps de la cuve 3, de manière à être maintenu à une hauteur prédéterminée à l'intérieur du corps de la cuve 3. Le corps de la cuve 3 est destiné à recevoir un liquide 4, électriquement conducteur, par exemple de l'eau. Le capteur 2 est isolé électriquement du corps de la cuve tant que le liquide contenu dans la cuve 3 n'atteint pas le niveau correspondant à ladite hauteur prédéterminée. Lorsque le liquide 4 atteint cette hauteur prédéterminée à l'intérieur de la cuve, la terminaison conductrice 9 du capteur 2 entre en contact avec le liquide 4.

Le capteur 2 est muni d'un point de connexion 8 ; un détecteur de courant 20 relié au point de connexion 8 du capteur 2 est agencé pour détecter le passage d'un courant électrique au travers du capteur 2.

Un circuit électrique d'alimentation 10 est agencé pour alimenter le capteur 2 en courant électrique. Ledit circuit électrique 10 comprend un premier point de raccordement 15 destiné à être relié électriquement à la phase 5 ou respectivement au neutre 6 du réseau électrique et un deuxième point de raccordement 16 destiné à être relié électriquement au neutre 6 ou respectivement à la phase 5 du réseau électrique. Ledit circuit électrique 10 comprend un montage électrique configuré pour relier électriquement le point de connexion 8 du capteur 2 à un potentiel électrique présentant une valeur de potentiel électrique différente de la valeur du potentiel électrique de la terre 7 du réseau électrique, lorsque :
- le premier point de raccordement 15 est relié à la phase 5 du réseau électrique et le deuxième pôle d'entrée 16 est relié au neutre 6 du réseau électrique, ou inversement lorsque,
- le premier point de raccordement 15 est relié au neutre 6 du réseau électrique et le deuxième pôle d'entrée 16 est relié à la phase 5 du réseau électrique.

Le montage électrique est configuré de telle sorte que, lorsque la liaison électrique, en amont du point de connexion 8 du capteur 2, entre le montage électrique et le point de connexion 8, est conductrice, alors le point de connexion 8 du capteur 2 est amené à une valeur de potentiel électrique suffisamment différente de la valeur de potentiel de la terre 7 du réseau électrique, pour que, lorsque la terminaison 9 du capteur 2 entre en contact avec le liquide 4, un courant électrique circule dans le capteur 2, entre le point de connexion 8 et le point de raccordement du corps de la cuve 3 à la terre 7. L'intensité du courant électrique est alors fonction de la conductivité électrique de l'eau présente dans la cuve.

Ainsi, lorsque le dispositif 1 est branché au secteur, et lorsque le liquide conducteur 4 atteint le niveau prédéterminé à l'intérieur du corps de la cuve 3, la terminaison 9 du capteur 2 entre en contact avec le liquide 4, ce qui, quel que soit le câblage de l'alimentation du dispositif sur la prise secteur, déclenche le passage d'un courant électrique dans le capteur 2, et la détection par le détecteur de courant 20 du courant électrique.

Selon une première forme de réalisation, le montage électrique comprend un diviseur de tension avec un premier pôle d'entrée 12 et un deuxième pôle d'entrée 13 reliés électriquement respectivement au premier point de raccordement 15 et au deuxième point de raccordement 16 du circuit électrique d'alimentation 10. Le diviseur de tension comprend également un pôle de sortie 11. Le point de connexion 8 du capteur 2 est raccordé au pôle de sortie 11.

Le diviseur de tension est ainsi raccordé par son premier pôle d'entrée 12, via le premier point de raccordement 15, à la phase 5 ou au neutre 6 du réseau électrique, et par son deuxième pôle d'entrée 13, via le deuxième point de raccordement 16, au neutre 6 ou à la phase du réseau électrique. La tension électrique entre le premier 12 et le deuxième 13 pôle d'entrée du diviseur de tension est donc celle qui existe entre le neutre 6 et la phase 5 du réseau électrique. Par exemple en Europe, la tension électrique entre le premier 12 et le deuxième 13 pôle d'entrée est donc une tension alternative qui oscille, à une fréquence d'environ 50 Hz, entre environ +325 V et environ - 325 V en valeur crête. Le diviseur de tension est configuré de sorte que le pôle de sortie 11 du diviseur présente un écart de potentiel suffisant avec le potentiel de la terre 7 pour que, au moins une fois par cycle, i.e. environ 50 fois par seconde, un courant circule entre le point de connexion 8 du capteur 2 et le point de raccordement de la cuve 3 à la terre 7. La configuration du diviseur de tension sera déterminée en fonction de la conductivité électrique du liquide 4. Cette configuration est réalisée par le choix des valeurs des impédances des composants qui relient électriquement, d'une part le premier pôle d'entrée 12, d'autre part le deuxième pôle d'entrée 13 du diviseur de tension, au pôle de sortie 11 du diviseur.

La configuration des impédances est choisie en fonction de la conductivité du liquide 4, de sorte que la différence de potentiel créée entre le point de connexion 8 du capteur et le potentiel de la terre 7 sera suffisante pour qu'un courant circule entre le point de connexion 8 et le point de raccordement de la cuve 3 à la terre 7. La différence de potentiel sera alors suffisante, aussi bien lorsque:
- le premier pôle d'entrée 12 est relié à la phase 5 du réseau électrique et le deuxième pôle d'entrée 13 est relié au neutre 6 du réseau électrique, ou inversement lorsque,
- le premier pôle d'entrée 12 est relié au neutre 6 du réseau électrique et le deuxième pôle d'entrée 13 est relié à la phase 5 du réseau électrique.

Selon un exemple, le diviseur de tension comportera deux impédances identiques entre chacun de ses pôles d'entrée 12, 13 et son pôle de sortie 11, de manière à constituer un diviseur à point milieu.

Selon un mode de réalisation, le montage électrique comprend une diode de puissance qui protège la diode de l'optocoupleur, et qui conduit un courant une fois par période, en alternance avec la diode de l'optocoupleur décrit ci-dessous, et une capacité avec une constante de temps suffisamment élevée pour stabiliser le circuit en tension.

Le détecteur de courant 20 est branché en série entre le pôle de sortie 11 du diviseur de tension et le point de connexion 8 du capteur, de manière à détecter le courant lorsqu'il circule entre le point de connexion 8 et le point de raccordement de la cuve 3 à la terre 7.

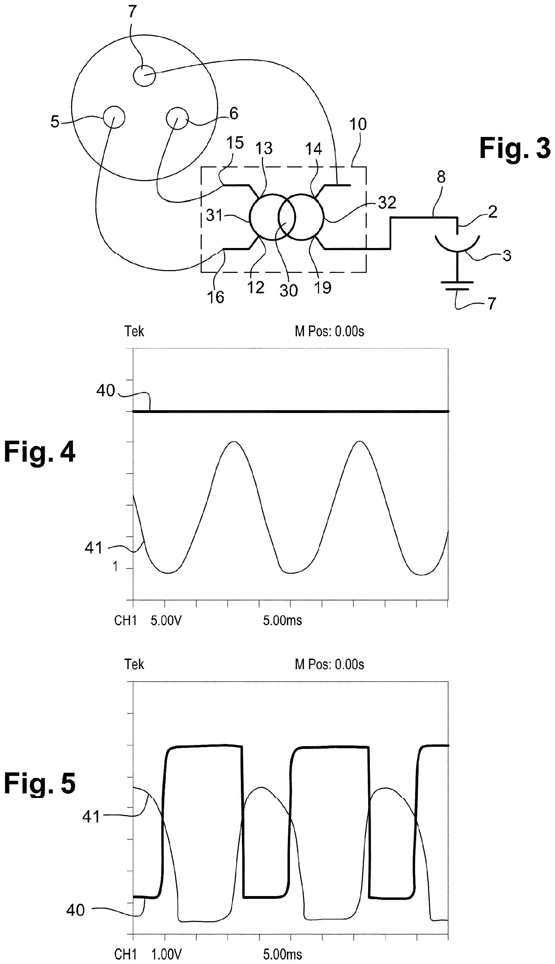

Selon un mode de réalisation, le détecteur de courant 20 comprend un microcontrôleur et un optocoupleur 21, par exemple une diode électroluminescente couplée à un phototransistor. La diode est branchée en série entre le pôle de sortie 11 du diviseur de tension et le point de connexion 8 du capteur. Ainsi, lorsqu'un courant circule entre ces deux points, la diode électroluminescente est mise en conduction et éclaire le phototransistor, ce qui provoque sa saturation. Le phototransistor de l'optocoupleur fonctionne en commutation comme un interrupteur, fermé lorsque la diode est traversée par un courant et ouvert lorsque la diode n'est pas traversée par un courant. Le microcontrôleur, branché aux bornes du phototransistor, observe donc un signal de tension nulle à chaque fois que la diode est mise en conduction, i.e. une fois par période de la tension alternative du secteur ou environ 50 fois par seconde, comme cela est représenté sur la courbe 40 de la figure 5. Sur la figure 4, la courbe 40 indique le signal observé par le microcontrôleur lorsqu'aucun courant ne passe dans le capteur et dans la diode. La courbe 41 représente la différence de potentiel électrique entre le pôle de sortie 11 du diviseur de tension et la terre 7 du réseau électrique.

Ainsi, en observant le signal de la courbe 40, le microcontrôleur du détecteur de courant 20 est capable de déterminer que l'eau est en contact avec le capteur.

Selon un aspect de l'invention, le microcontrôleur comprend une alimentation électrique autonome 22, en courant continu et basse tension, par exemple 5 V.

Selon un aspect de l'invention, le microcontrôleur comprend une broche 23 reliée électriquement au phototransistor de l'optocoupleur 21, lorsque le détecteur de courant est un optocoupleur 21 (cf. figure 1). Dans ce cas, le phototransistor étant galvaniquement isolé de la diode électroluminescente, le signal électrique détecté par le microcontrôleur est également galvaniquement isolé du réseau. Cette isolation permet de protéger la détection, par le microcontrôleur, du courant dans le capteur, en l'isolant des perturbations électriques liées au réseau électrique.

Selon un aspect de l'invention, la masse 24 de l'alimentation électrique 22 du microcontrôleur est reliée à une masse du circuit d'alimentation électrique 10.

Selon un aspect de l'invention, le circuit d'alimentation électrique 10 et le détecteur de courant 20 sont montés sur une seule carte électronique.

Selon une deuxième forme de réalisation, représentée sur la figure 2, le montage électrique comprend une alimentation électrique isolée 40 ; l'alimentation électrique isolée comprend un premier pôle d'entrée 12 et un deuxième pôle d'entrée 13 reliés électriquement respectivement au premier point de raccordement 15 et au deuxième point de raccordement 16 du circuit d'alimentation 10. L'alimentation électrique isolée 40 est ainsi raccordée par son premier pôle d'entrée 12, via le premier point de raccordement 16 à la phase 5 (ou au neutre 6) du secteur et par son deuxième pôle d'entrée 13, via le deuxième point de raccordement 15, au neutre 6 (ou à la phase 5) du secteur. L'alimentation électrique isolée 40 comprend également un premier pôle de sortie 14 et un deuxième pôle de sortie 19, le premier pôle de sortie 14 étant relié électriquement à la terre 7 du réseau électrique. Le point de connexion 8 du capteur 2 est raccordé au deuxième pôle de sortie 19. Selon cette deuxième forme de réalisation, le détecteur de courant 20 est branché en série entre le pôle de sortie 19 de l'alimentation électrique 40, et le point de connexion 8 du capteur. Le détecteur de courant 20 peut prendre la forme d'un optocoupleur 21 associé à un microcontrôleur, telle que déjà décrite pour la première forme de réalisation du dispositif représentée en figure 1 ; dans ce cas, la diode de l'optocoupleur est branchée en série entre le pôle de sortie 19 de l'alimentation électrique isolée 40, et le point de connexion 8 du capteur 2, avec un composant, tel une résistance, en série également, pour protéger la diode de l'optocoupleur, en limitant le courant dans la diode.

Selon une troisième forme de réalisation de l'invention, représentée sur la figure 3, l'alimentation électrique isolée est un transformateur électrique 30. Le transformateur électrique 30 comprend un bobinage primaire 31 relié électriquement au premier pôle d'entrée 12 et au deuxième pôle d'entrée 13. Le transformateur 30 comprend également un bobinage secondaire 32 relié électriquement au premier pôle de sortie 14 et au deuxième pôle de sortie 19. Le point de connexion 8 du capteur 2 est raccordé au deuxième pôle de sortie 19. Le reste du montage électrique est similaire à celui décrit pour la deuxième forme de réalisation, en référence à la figure 2.

Selon ces deuxième ou troisième forme de réalisation de l'invention, comme pour la première forme de réalisation, si la différence de potentiel créée entre le point de connexion 8 du capteur et le potentiel de la terre 7 est suffisante pour faire circuler un courant entre le point de connexion 8 et le point de raccordement de la cuve 3 à la terre 7, elle le sera aussi bien lorsque:
- le premier pôle d'entrée 12 est relié à la phase 5 du réseau électrique et le deuxième pôle d'entrée 13 est relié au neutre 6 du réseau électrique, ou inversement lorsque
- le premier pôle d'entrée 12 est relié au neutre 6 du réseau électrique et le deuxième pôle d'entrée 13 est relié à la phase 5 du réseau électrique.

En outre, selon ces dispositions, les premier et deuxième pôles d'entrée 12, 13 sont galvaniquement isolés des premier et deuxième pôles de sortie 14, 19, ce qui présente l'avantage d'isoler galvaniquement le courant électrique généré et détecté dans le capteur 2, des perturbations électriques induites par le réseau électrique. Dans le cas où le détecteur de courant est un optocoupleur 21, l'isolation galvanique présente du fait de l'optocoupleur 21 vient s'ajouter à celle introduite par le transformateur 30 pour mieux protéger la détection du courant dans le capteur 2 des perturbations électriques éventuelles liées au secteur.

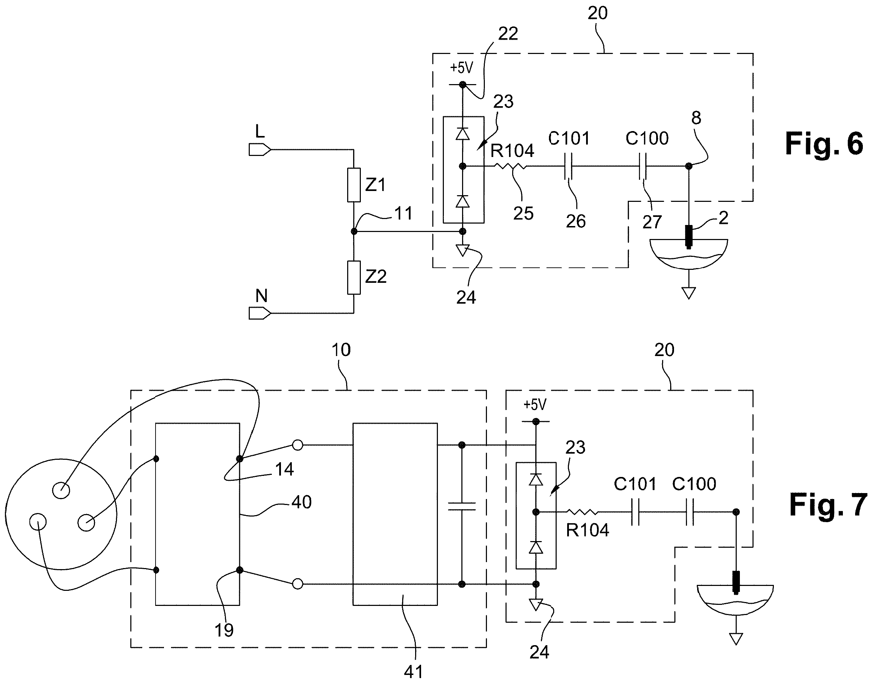

Selon un mode de réalisation, représenté sur la figure 6, le détecteur de courant 20 comprend un microcontrôleur électriquement relié par sa broche 23 au point de connexion 8 du capteur 2, avec en série entre la broche 23 et le point de connexion 8, une résistance 25 et deux capacités 26 et 27 ; le microcontrôleur est électriquement relié par sa masse 24 au pôle de sortie 11 du montage électrique comprenant un diviseur de tension selon la première forme de réalisation, telle que représentée associée à un détecteur de courant 20 avec un optocoupleur 21 sur la figure 1, et sans optocoupleur sur la figure 6.

Selon un autre mode de réalisation, représenté sur la figure 7, le détecteur de courant 20 configuré comme cela vient d'être décrit en référence à la figure 6, peut être électriquement relié par sa masse 24 au deuxième pôle de sortie 19 d'une alimentation électrique isolée 40. Dans ce cas, si la sortie 19 de l'alimentation électrique isolée 40 est une tension alternative, il sera nécessaire d'insérer entre l'alimentation isolée 40 et le détecteur de courant 20 un convertisseur 41 de tension alternative en tension continue.

Bien que l'invention ait été décrite en liaison avec des exemples particuliers il est bien évident qu'elle n'y est nullement limitée.

Des modifications restent possibles, notamment du point de vue de l'agencement et de la constitution des différents éléments ou par substitution d'équivalents techniques, sans sortir pour autant du domaine de protection de l'invention.

## Revendications

1. Dispositif (1) de détection du niveau d'un liquide conducteur (4) contenu dans une cuve (3) d'un générateur de vapeur, ladite cuve (3) comprenant un corps conducteur destiné à être relié électriquement à un point de connexion présentant le potentiel électrique de la terre (7) du réseau électrique délivrant un courant électrique d'alimentation alternatif, ledit dispositif comprenant:
- un capteur (2) relié mécaniquement au corps de la cuve (3) mais isolé électriquement de celui-ci, et comprenant une terminaison conductrice (9) destinée à être positionnée à un niveau prédéterminé à l'intérieur de la cuve (3) de manière à plonger dans le liquide conducteur (4) lorsque celui-ci atteint le niveau prédéterminé dans la cuve (3), le capteur (2) présentant un point de connexion (8) du capteur,
- un détecteur de courant (20) relié au point de connexion (8) du capteur (2) et agencé pour détecter le passage d'un courant électrique au travers du capteur (2) lorsque le liquide conducteur (4) atteint le niveau prédéterminé dans la cuve (3),
- un circuit électrique (10) d'alimentation agencé pour alimenter le capteur (2) en courant électrique, ledit circuit électrique (10) comprenant un premier point de raccordement (15) destiné à être relié électriquement à la phase (5) ou respectivement au neutre (6) du réseau électrique et un deuxième point de raccordement (16) destiné à être relié électriquement au neutre (6) ou respectivement à la phase (5) du réseau électrique;
ledit dispositif (1) de détection étant arrangé de sorte que le circuit électrique (10) comprend un montage électrique agencé pour relier électriquement le point de connexion (8) du capteur (2) à un potentiel électrique présentant une valeur différente du potentiel électrique de la terre (7) du réseau électrique lorsque:
- le premier point de raccordement (15) est relié à la phase (5) du réseau électrique et le deuxième point de raccordement (16) est relié au neutre (6) du réseau électrique, ou inversement lorsque
- le premier point de raccordement (15) est relié au neutre (6) du réseau électrique et le deuxième point de raccordement (16) est relié à la phase (5) du réseau électrique
dans lequel le montage électrique comprend un diviseur de tension avec un premier pôle d'entrée (12) et un deuxième pôle d'entrée (13) relié électriquement respectivement au premier (15) et au deuxième (16) point de raccordement, et un pôle de sortie (11) agencé pour alimenter le capteur (2) en courant, ou
le montage électrique comprend une alimentation isolée (40) comprenant un premier pôle d'entrée (12) et un deuxième pôle d'entrée (13) reliés électriquement respectivement au premier (15) et au deuxième (16) point de raccordement électrique, et comprenant un premier pôle de sortie (14) et un deuxième pôle de sortie (19), le premier pôle de sortie (14) étant relié électriquement à un point de connexion présentant le potentiel électrique de la terre du réseau électrique, et le deuxième pôle de sortie étant agencé pour alimenter le capteur (2) en courant.

2. Dispositif (1) selon la revendication 1, dans lequel le diviseur de tension comprend une première impédance (17) et une deuxième impédance (18) dont les valeurs sont choisies en fonction de la conductivité électrique du liquide conducteur (4).

3. Dispositif (1) de détection selon la revendication 2, dans lequel la première impédance (17) et la deuxième impédance (18) sont identiques, de manière à obtenir un diviseur de tension à point milieu.

4. Dispositif (1) de détection selon la revendication 1, dans lequel l'alimentation isolée (40) est un transformateur électrique (30) comprenant un bobinage primaire (31) relié électriquement au premier pôle d'entrée (12) et au deuxième pôle d'entrée (13), et un bobinage secondaire (32) relié électriquement au premier pôle de sortie (14) et au deuxième pôle de sortie (19).

5. Dispositif (1) de détection selon l'une des revendications précédentes, dans lequel le détecteur de courant (20) comprend un optocoupleur (21) comportant une diode électroluminescente couplée à un phototransistor, la diode électroluminescente étant isolée galvaniquement du phototransistor et reliée électriquement au point de connexion du capteur (2).

6. Dispositif (1) de détection selon l'une des revendications 1 à 4, dans lequel le détecteur de courant (20) comprend un microcontrôleur comportant une broche (23) reliée électriquement au point de connexion (8) du capteur (2), le cas échéant au phototransistor (21).

7. Dispositif (1) de détection selon la revendication 6, dans lequel le microcontrôleur comprend une alimentation électrique autonome (22) en courant continu.

8. Dispositif (1) de détection selon la revendication 7, dans lequel la masse de l'alimentation électrique du microcontrôleur est reliée à une masse du circuit électrique (10) d'alimentation.

9. Dispositif (1) de détection selon l'une des revendications 1 à 8, dans lequel le circuit électrique (10) d'alimentation et le détecteur de courant (20) sont montés sur une même carte électronique.

## Patentansprüche

1. Vorrichtung (1) zur Erfassung des Pegels einer leitenden Flüssigkeit (4), die in einem Behälter (3) eines Dampferzeugers enthalten ist, wobei der Behälter (3) einen leitenden Körper umfasst, der dazu bestimmt ist, elektrisch mit einem Verbindungspunkt verbunden zu werden, der das elektrische Potential der Erde (7) des Stromnetzes aufweist, das elektrischen Versorgungswechselstrom liefert, wobei die Vorrichtung umfasst:
- einen Sensor (2), der mechanisch mit dem Körper des Behälters (3) verbunden ist, aber elektrisch von diesem isoliert ist, und einen leitenden Abschluss (9) umfasst, der dazu bestimmt ist, auf einem vorbestimmten Pegel innerhalb des Behälters (3) positioniert zu werden, um in die leitende Flüssigkeit (4) einzutauchen, wenn diese den vorbestimmten Pegel im Behälter (3) erreicht, wobei der Sensor (2) einen Verbindungspunkt (8) des Sensors aufweist,
- einen Stromdetektor (20), der mit dem Verbindungspunkt (8) des Sensors (2) verbunden ist, und eingerichtet ist, um den Durchgang eines elektrischen Stroms durch den Sensor (2) zu erfassen, wenn die leitende Flüssigkeit (4) den vorbestimmten Pegel im Behälter (3) erreicht,
- eine elektrische Versorgungsschaltung (10), die eingerichtet ist, um den Sensor (2) mit elektrischem Strom zu versorgen, wobei die elektrische Schaltung (10) einen ersten Anschlusspunkt (15) umfasst, der dazu bestimmt ist, elektrisch mit der Phase (5) beziehungsweise dem Neutralleiter (6) des Stromnetzes verbunden zu werden, und einen zweiten Anschlusspunkt (16), der dazu bestimmt ist, elektrisch mit dem Neutralleiter (6) beziehungsweise der Phase (5) des Stromnetzes verbunden zu werden;
wobei die Erfassungsvorrichtung (1) so angeordnet ist, dass die elektrische Schaltung (10) eine elektrische Anordnung umfasst, die eingerichtet ist, um den Verbindungspunkt (8) des Sensors (2) elektrisch mit einem elektrischen Potential zu verbinden, das einen anderen Wert als das elektrische Potential der Erde (7) des Stromnetzes aufweist, wenn:
- der erste Anschlusspunkt (15) mit der Phase (5) des Stromnetzes verbunden ist und der zweite Anschlusspunkt (16) mit dem Neutralleiter (6) des Stromnetzes verbunden ist oder umgekehrt, wenn
- der erste Anschlusspunkt (15) mit dem Neutralleiter (6) des Stromnetzes verbunden ist und der zweite Anschlusspunkt (16) mit der Phase (5) des Stromnetzes verbunden ist,
wobei die elektrische Anordnung einen Spannungsteiler umfasst mit einem ersten Eingangspol (12) und einem zweiten Eingangspol (13), der mit dem ersten (15) beziehungsweise dem zweiten (16) Anschlusspunkt elektrisch verbunden ist, und einem Ausgangspol (11), der eingerichtet ist, um den Sensor (2) mit Strom zu versorgen, oder
die elektrische Anordnung eine isolierte Versorgung (40) umfasst, einen ersten Eingangspol (12) und einen zweiten Eingangspol (13) umfassend, die elektrisch mit dem ersten (15) beziehungsweise dem zweiten (16) elektrischen Anschlusspunkt verbunden sind, und einen ersten Ausgangspol (14) und einen zweiten Ausgangspol (19) umfassend, wobei der erste Ausgangspol (14) elektrisch mit einem Verbindungspunkt verbunden ist, der das elektrische Potential der Erde des Stromnetzes aufweist, und wobei der zweite Ausgangspol eingerichtet ist, um den Sensor (2) mit Strom zu versorgen.

2. Vorrichtung (1) nach Anspruch 1, wobei der Spannungsteiler eine erste Impedanz (17) und eine zweite Impedanz (18) umfasst, deren Werte in Abhängigkeit von der elektrischen Leitfähigkeit der leitenden Flüssigkeit (4) ausgewählt sind.

3. Erfassungsvorrichtung (1) nach Anspruch 2, wobei die erste Impedanz (17) und die zweite Impedanz (18) identisch sind, um einen Spannungsteiler des Mittelpunkts zu erhalten.

4. Erfassungsvorrichtung (1) nach Anspruch 1, wobei die isolierte Versorgung (40) ein elektrischer Transformator (30) ist, eine Primärwicklung (31) umfassend, die elektrisch mit dem ersten Eingangspol (12) und dem zweiten Eingangspol (13) verbunden ist, und eine Sekundärwicklung (32), die elektrisch mit dem ersten Ausgangspol (14) und dem zweiten Ausgangspol (19) verbunden ist.

5. Erfassungsvorrichtung (1) nach einem der vorhergehenden Ansprüche, wobei der Stromdetektor (20) einen Optokoppler (21) umfasst, eine Leuchtdiode beinhaltend, die mit einem Fototransistor gekoppelt ist, wobei die Leuchtdiode galvanisch vom Fototransistor isoliert und elektrisch mit dem Verbindungspunkt des Sensors (2) verbunden ist.

6. Erfassungsvorrichtung (1) nach einem der Ansprüche 1 bis 4, wobei der Stromdetektor (20) einen Mikrocontroller umfasst, einen Stift (23) beinhaltend, der elektrisch mit dem Verbindungspunkt (8) des Sensors (2) verbunden ist, gegebenenfalls mit dem Fototransistor (21).

7. Erfassungsvorrichtung (1) nach Anspruch 6, wobei der Mikrocontroller eine eigenständige elektrische Versorgung (22) mit Gleichstrom umfasst.

8. Erfassungsvorrichtung (1) nach Anspruch 7, wobei die Masse der elektrischen Versorgung des Mikrocontrollers mit einer Masse der elektrischen Versorgungsschaltung (10) verbunden ist.

9. Erfassungsvorrichtung (1) nach einem der Ansprüche 1 bis 8, wobei die elektrische Versorgungsschaltung (10) und der Stromdetektor (20) auf derselben Elektronikplatine montiert sind.

## Claims

1. A device (1) for detecting the level of a conductive liquid (4) contained in a tank (3) of a steam generator, said tank (3) comprising a conductive body intended to be electrically connected to a connection point presenting the electrical potential of the ground (7) of the electrical network delivering an alternating electrical supply current, said device comprising:
- a sensor (2) mechanically connected to the body of the tank (3) but electrically isolated from the latter, and comprising a conductive termination (9) intended to be positioned at a predetermined level inside the tank (3) so as to dip into the conductive liquid (4) when the latter reaches the predetermined level in the tank (3), the sensor (2) having a connection point (8) of the sensor,
- a current detector (20) connected to the connection point (8) of the sensor (2) and arranged to detect the passage of an electric current through the sensor (2) when the conductive liquid (4) reaches the predetermined level in the tank (3),
- an electrical supply circuit (10) arranged to supply the sensor (2) with electric current, said electrical circuit (10) comprising a first connection point (15) intended to be electrically connected to the phase (5) or respectively to the neutral (6) of the electrical network and a second connection point (16) intended to be electrically connected to the neutral (6) or respectively to the phase (5) of the electrical network;
said detection device (1) being arranged so that the electrical circuit (10) comprises an electrical assembly arranged to electrically connect the connection point (8) of the sensor (2) to an electrical potential having a value different from the electrical potential of the ground (7) of the electrical network when:
- the first connection point (15) is connected to the phase (5) of the electrical network and the second connection point (16) is connected to the neutral (6) of the electrical network, or vice versa when
- the first connection point (15) is connected to the neutral (6) of the electrical network and the second connection point (16) is connected to the phase (5) of the electrical network
in which the electrical assembly comprises a voltage divider with a first input pole (12) and a second input pole (13) electrically connected respectively to the first (15) and to the second (16) connection point, and an output pole (11) arranged to supply the sensor (2) with current, or
the electrical assembly comprises an isolated power supply (40) comprising a first input pole (12) and a second input pole (13) electrically connected respectively to the first (15) and to the second (16) electrical connection point, and comprising a first output pole (14) and a second output pole (19), the first output pole (14) being electrically connected to a connection point having the electric potential of the ground of the electrical network, and the second output pole being arranged to supply the sensor (2) with current.

2. The device (1) according to claim 1, wherein the voltage divider comprises a first impedance (17) and a second impedance (18) whose values are selected according to the electrical conductivity of the conductive liquid (4).

3. The detection device (1) according to claim 2, wherein the first impedance (17) and the second impedance (18) are identical, so as to obtain a midpoint voltage divider.

4. The detection device (1) according to claim 1, wherein the isolated power supply (40) is an electrical transformer (30) comprising a primary winding (31) electrically connected to the first input pole (12) and to the second input pole (13), and a secondary winding (32) electrically connected to the first output pole (14) and to the second output pole (19).

5. The detection device (1) according to any of the preceding claims, wherein the current detector (20) comprises an optocoupler (21) including a light-emitting diode coupled to a phototransistor, the light-emitting diode being galvanically isolated from the phototransistor and electrically connected to the connection point (2) of the sensor.

6. The detection device (1) according to any of claims 1 to 4, wherein the current detector (20) comprises a microcontroller including a pin (23) electrically connected to the connection point (8) of the sensor (2), if necessary to the phototransistor (21).

7. The detection device (1) according to claim 6, wherein the microcontroller comprises an autonomous direct current power supply (22).

8. The detection device (1) according to claim 7, wherein the ground of the power supply of the microcontroller is connected to a ground of the electrical supply circuit (10).

9. The detection device (1) according to any of claims 1 to 8, wherein the electrical supply circuit (10) and the current detector (20) are mounted on the same electronic card.
